# FASCICULE DE BREVET EUROPEEN

(11) **EP 2 950 166 B1**
(45) Date de publication et mention de la délivrance du brevet: **20.02.2019**
(21) Numéro de dépôt: 14170035.1
(22) Date de dépôt: 27.05.2014
(51) Int. Cl.: G04B 19/30

(54) **Jeu d'aiguilles d'affichage lumineuses pour objet portable tel qu'une montre ou un instrument de mesure**
Set aus Leuchtzeigern zum Anzeigen für tragbaren Gegenstand wie Armbanduhr oder Messinstrument
Set of luminous display hands for a portable object such as a watch or a measuring instrument

(43) Date de publication de la demande: 02.12.2015
(73) Titulaire: The Swatch Group Research and Development Ltd., 2074 Marin (CH)
(72) Inventeur: Tortora, Pierpasquale, 2000 Neuchâtel (CH)
(74) Mandataire: Supper, Marc

(56) Documents cités:
- WO-A1-97/28424
- GB-A- 2 233 478
- GB-A- 2 421 809
- US-A- 2 363 763

## Description

### Domaine de l'invention

La présente invention concerne un jeu d'aiguilles d'affichage lumineuses pour un objet portable. La présente invention concerne en particulier un jeu d'aiguilles d'affichage lumineuses pour une pièce d'horlogerie telle qu'une montre-bracelet ou un appareil de mesure à affichage analogique.

### Arrière-plan technologique de l'invention

Les aiguilles de montre sont fabriquées avec des tolérances serrées. Le trou de l'aiguille pour le passage du canon est en général réalisé avec des précisions de l'ordre du micromètre. Cette précision est nécessaire pour pouvoir garantir un chassage correct de l'aiguille sur son axe. Les aiguilles sont en général réalisées à partir d'une feuille métallique dont l'épaisseur n'excède pas quelques centaines de micromètre. Pour réduire l'épaisseur de la montre, la distance entre les aiguilles et la glace de la montre n'excède habituellement pas un millimètre, tandis que la distance qui sépare deux aiguilles coaxiales, par exemple l'aiguille des heures et celle des minutes, est de l'ordre d'une fraction de millimètre.

Les aiguilles d'une montre jouent bien sûr un rôle fonctionnel, par exemple indiquer l'heure courante, mais elles jouent également un rôle décoratif en contribuant largement à l'aspect esthétique de la montre qu'elles équipent. A cet effet, les aiguilles doivent répondre à des critères stricts. Une technique bien connue dans le monde horloger pour permettre aux aiguilles d'être visibles dans le noir consiste à revêtir la surface des aiguilles orientée du côté de l'utilisateur d'une couche de matériau phosphorescent. Un exemple d'un tel matériau est un pigment photoluminescent non radioactif commercialisé par la société japonaise Nemoto & Co., Ltd. sous la marque enregistrée Super-Luminova®. Ce pigment peut aussi être utilisé pour revêtir les index horaires du cadran de la montre. De jour, la couche de matériau phosphorescent absorbe l'énergie lumineuse. Cette énergie lumineuse est ensuite restituée de nuit par la couche de matériau phosphorescent sous forme de rayonnement lumineux. Cette technique d'illumination des aiguilles d'une montre est assez commode dans la mesure où le fonctionnement de la couche de matériau phosphorescent est totalement passif et ne nécessite donc, pour son fonctionnement, l'actionnement d'aucun dispositif mécanique ou électrique, ni prélèvement d'énergie qui serait fournie par la montre. Cette technique d'illumination des aiguilles d'une montre présente toutefois également certains inconvénients au premier rang desquels on peut citer le fait que la couche de matériau phosphorescent nécessite d'être préalablement éclairée par une source de lumière avant de pouvoir émettre de l'énergie lumineuse. De même, le phénomène de réémission de lumière par effet de phosphorescence est limité dans le temps, de sorte qu'au fur et à mesure que la couche phosphorescente relâche l'énergie lumineuse qu'elle a stockée, sa luminosité décroît. Les aiguilles revêtues d'une couche de matériau phosphorescent n'ont donc pas un aspect constant. Enfin, la gamme de matériaux phosphorescents disponibles sur le marché est limitée, de sorte que la plupart des montres dans lesquelles de tels matériaux sont utilisés finissent par avoir le même aspect dans l'obscurité et même en plein jour.

A titre de variante de la couche phosphorescente, on peut envisager d'utiliser des techniques d'illumination actives dans lesquelles des sources de lumière discrètes sont utilisées pour éclairer les aiguilles d'une montre. A titre d'exemple, il est possible d'intégrer dans la montre une source de lumière ultraviolette, de façon que la radiation émise vienne exciter la matière fluorescente qui recouvre les aiguilles. Un tel mode de réalisation présente cependant également des inconvénients. D'une part, les sources de lumière ultraviolettes, également appelées sources de lumière noire, émettent une certaine quantité de lumière visible, de sorte que l'utilisateur est susceptible de percevoir un halo de lumière à l'endroit où la source de lumière est implantée. D'autre part, étant donné que les aiguilles sont mobiles par rapport à la source de lumière ultraviolette, elles ne reçoivent pas toujours la même quantité de lumière ultraviolette, de sorte que leur luminosité peut varier.

Les documents WO 97/28424 A1 et GB 2 233 478 A présentent des jeux d'aiguilles lumineuses éclairées électriquement.

### Résumé de l'invention

La présente invention a pour but de remédier aux inconvénients susmentionnés ainsi qu'à d'autres encore en procurant un jeu d'aiguilles d'affichage lumineuses pouvant être illuminées à la demande de l'utilisateur, selon une grande variété de couleurs et en respectant les contraintes dimensionnelles et esthétiques auxquelles elle est soumise.

A cet effet, la présente invention concerne un jeu d'aiguilles d'affichage lumineuses pour un objet selon les revendications indépendantes 1 et 6.

Grâce à ces caractéristiques, la présente invention procure un jeu d'aiguilles montées concentriquement et qui possèdent chacune une source de lumière pour leur illumination. Ce résultat remarquable est atteint grâce au fait que l'un des pôles de l'une des sources de lumière est relié à l'un des pôles de l'autre source de lumière grâce au contact électrique entre les deux aiguilles, ce qui permet d'utiliser les axes d'entraînement des deux aiguilles pour la connexion électrique des sources de lumière aux bornes de la source d'alimentation. Par ailleurs, du fait que l'on utilise les aiguilles pour l'acheminement du signal électrique, on obtient un montage d'une grande simplicité qui est donc moins onéreux et plus fiable.

Selon une caractéristique complémentaire de l'invention, le premier pôle de la seconde source de lumière est relié au premier pôle de la première source de lumière par contact de frottement entre la première et la seconde aiguille lumineuse.

Selon une autre caractéristique de l'invention, la première aiguille d'affichage lumineuse comprend un guide de lumière muni d'un élément annulaire dans lequel est percé le trou pour le passage de l'axe d'entraînement de la première aiguille d'affichage lumineuse, et la seconde aiguille d'affichage lumineuse comprend un guide de lumière muni d'un élément annulaire dans lequel est percé le trou pour le passage de l'axe d'entraînement de la seconde aiguille d'affichage lumineuse, le contact entre la première et la seconde aiguille lumineuse s'opérant par frottement entre les deux éléments annulaires.

Du fait que le contact électrique entre les deux aiguilles d'affichage lumineuses s'opère par frottement entre les deux éléments annulaires, le contact électrique entre les deux aiguilles n'est jamais rompu et ce quelle que soit la position relative des deux aiguilles.

### Brève description des figures

D'autres caractéristiques et avantages de l'invention ressortiront plus clairement de la description détaillée qui suit d'un mode de réalisation de l'invention, cet exemple étant donné à titre purement illustratif et non limitatif seulement en liaison avec le dessin annexé sur lequel :
- la figure 1 est une vue de dessus d'une aiguille d'affichage lumineuse ;
- la figure 2 est une vue en coupe selon la ligne II-II de la figure 1 d'une aiguille d'affichage lumineuse ;
- la figure 3 est une vue en perspective d'une pièce support électriquement conductrice qui porte la source de lumière ;
- la figure 4 est une vue analogue à celle de la figure 2 et montre l'intégration de la source de lumière dans le guide de lumière ;
- la figure 5 est une vue en coupe longitudinale d'un premier mode de réalisation d'un jeu d'aiguilles d'affichage lumineuses selon l'invention dans lequel les sources de lumière respectives sont montées en parallèle ;
- la figure 6 est une représentation schématique d'une variante de réalisation du jeu d'aiguilles d'affichage lumineuses selon l'invention dans laquelle les sources de lumière sont montées en parallèle en bout d'aiguille ;
- la figure 7 est une vue en coupe longitudinale d'un second mode de réalisation d'un jeu d'aiguilles d'affichage lumineuses selon l'invention dans lequel les sources de lumière respectives sont montées en série ;
- la figure 8 est une vue en coupe longitudinale d'une première variante de réalisation du jeu d'aiguilles d'affichage lumineuses dans laquelle les sources de lumière respectives sont montées en série ;
- la figure 9 est une représentation schématique d'une seconde variante de réalisation du jeu d'aiguilles d'affichage lumineuses selon l'invention dans laquelle les sources de lumière sont montées en série en bout d'aiguille, et
- les figures 10 à 13 sont des vues de dessus de divers modes de réalisation d'une aiguille d'affichage lumineuse selon l'invention.

### Description détaillée d'un mode de réalisation de l'invention

La présente invention procède de l'idée générale inventive qui consiste à éclairer un jeu d'aiguilles d'affichage lumineuses pour un objet portable tel qu'une montre-bracelet ou bien un instrument de mesure au moyen d'une source de lumière de type ponctuel, préférentiellement une diode électroluminescente. Un tel jeu d'aiguilles lumineuses d'affichage présente plusieurs avantages : son aspect ne s'altère pas avec le temps qui s'écoule et, en raison de la large gamme de diodes électroluminescentes existantes, il est possible de personnaliser l'aspect des aiguilles et donc l'aspect de l'objet portable qui en est équipé, ce qui permet de se distinguer de la concurrence. Par ailleurs, selon un autre avantage de l'invention, la source de lumière est logée dans le guide de lumière et non pas, par exemple, dans l'axe d'entraînement des aiguilles, ce qui simplifie considérablement la conception de telles aiguilles de même que leur branchement électrique à la source d'énergie électrique logée dans le bâti de l'objet portable.

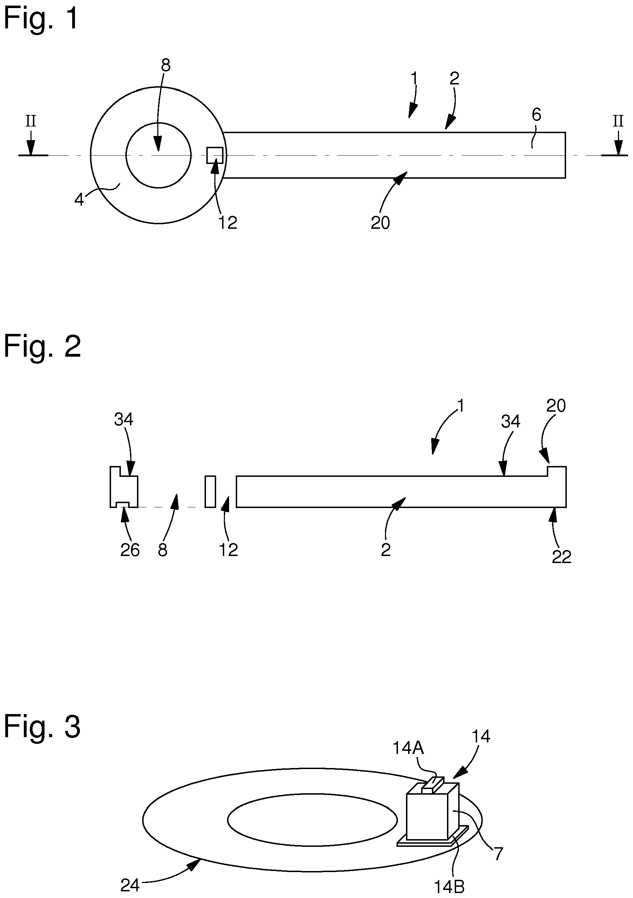

Les figures 1 et 2 sont des vues respectivement de dessus et en coupe selon la ligne II-II de la figure 1 d'une aiguille d'affichage lumineuse 1. L'aiguille lumineuse d'affichage 1 comprend un guide de lumière désigné dans son ensemble par la référence numérique générale 2 et qui peut être réalisé, au choix, en un matériau transparent, semi-transparent ou translucide tel que du plastique, du quartz, de la silice, du saphir, du rubis ou autre. Le guide de lumière 2 comprend un élément annulaire 4 prolongé par une partie 6 sensiblement rectiligne. L'élément annulaire 4 présente en son centre un trou 8 pour le passage d'un axe d'entraînement 10. Un logement 12 destiné à héberger une source de lumière 14 telle qu'une diode électroluminescente est ménagé dans la partie annulaire 4 du guide de lumière 2, dans la zone où cette partie annulaire 4 est prolongée par la partie rectiligne 6. De la sorte, la source de lumière 14 est capable d'injecter de la lumière par couplage à l'intérieur du guide de lumière 2, et en particulier dans la partie rectiligne 6 de ce guide de lumière 2. Comme expliqué plus en détail ci-dessous, la source de lumière 14 comprend (voir figure 3) des premier et second pôles 14A et 14B pour sa connexion électrique à une source d'alimentation 16 en énergie électrique logée à l'intérieur d'un bâti 18 par exemple d'une montre-bracelet équipée de l'aiguille d'affichage lumineuse. La source d'alimentation 16 en énergie électrique peut être au choix une pile ou une batterie rechargeable. Etant donné que les sources de lumière dont il est question ici ont typiquement une consommation électrique de l'ordre de quelques dizaines à quelques centaines de microampères, on peut même envisager de les alimenter au moyen d'un barillet de montre ou bien d'une génératrice ou d'une dynamo actionnée par l'utilisateur par exemple au moyen d'un bouton-poussoir prévu sur l'objet portable. L'intérêt d'une telle solution réside dans le fait qu'elle permet d'éviter toute solution de stockage de l'énergie reposant sur des phénomènes physicochimiques. On comprendra d'autre part que, même en utilisant des sources de lumière dont la consommation est aussi faible que quelques dizaines de microampères, l'éclairage obtenu est déjà équivalent à celui des matériaux phosphorescents dont sont habituellement revêtues les aiguilles d'affichage lumineuses.

Comme on l'observe sur les figures 1 et 2, le guide de lumière 2 présente une section de forme carrée ou rectangulaire avec une première portion de surface 20 dirigée du côté d'un observateur, et une seconde portion de surface 22 opposée à la première portion de surface 20. Dans l'exemple représenté au dessin, les première et seconde portions de surface 20 et 22 sont planes. Il va cependant de soi que ces portions de surface 20 et 22 peuvent s'écarter de la planéité et être par exemple courbes au moins partiellement ou encore être structurées pour produire les effets optiques désirés. L'épaisseur du guide de lumière 2 considérée entre les première et seconde portions de surface 20 et 22 est typiquement comprise entre 200 et 300 micromètres.

La figure 3 est une vue en perspective d'une pièce support 24 électriquement conductrice qui porte la source de lumière 14. Cette pièce support 24 a une forme d'anneau dont le diamètre intérieur n'empiète pas sur le trou 8 ménagé dans l'élément annulaire 4 du guide de lumière 2, et dont le diamètre extérieur est inférieur au diamètre extérieur de l'élément annulaire 4 du guide de lumière 2. Pour faciliter la fixation, par exemple par collage, de la pièce support 24, on peut prévoir de ménager dans la base de l'élément annulaire 4 une rainure circulaire 26 dans laquelle la pièce support 24 est logée. On comprendra que le positionnement de la source de lumière 14 sur la pièce support 24 est tel que, lorsque la pièce support 24 est fixée sur le guide de lumière 2, la source de lumière 14 fait saillie dans le logement 12 destiné à son hébergement.

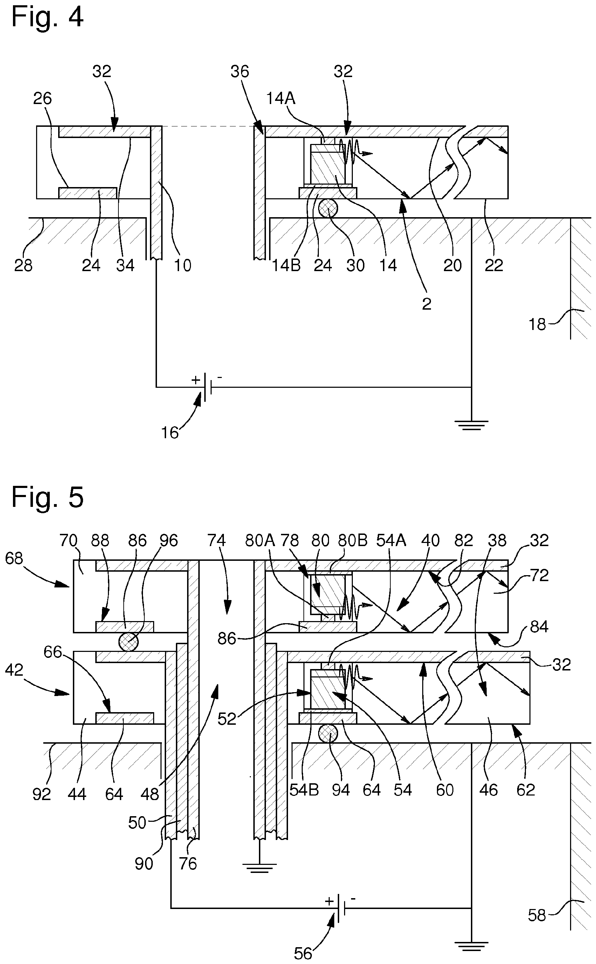

La figure 4 montre l'intégration de la source de lumière 14 dans le guide de lumière 2. Sur cette figure 4, le second pôle 14B de la source de lumière 14 est relié au bâti 18 de l'objet portable et, par conséquent, à la source d'alimentation 16 en énergie électrique via la pièce support 24 électriquement conductrice. A titre d'exemple illustratif et non limitatif seulement, la connexion électrique entre la pièce support 24 et un élément du bâti 18 de l'objet portable tel qu'un cadran 28 au-dessus duquel se déplace l'aiguille d'affichage lumineuse 1 se fait par l'intermédiaire d'une pièce de frottement 30. Cette pièce de frottement 30 sera préférentiellement positionnée le plus près possible de l'axe d'entraînement 10, de manière à réduire le plus possible les effets du frottement sur la rotation de l'aiguille d'affichage lumineuse 1. Quant au premier pôle 14A de la source de lumière 14, il est relié à la source d'alimentation 16 via une pièce d'habillage 32 électriquement conductrice ménagée sur la première portion de surface 20 du guide de lumière 2 et en contact électrique avec l'axe d'entraînement 10. La pièce d'habillage 32 a donc une fonction de connecteur électrique en plus de sa fonction décorative. En effet, la présence de la pièce d'habillage 32 donne au guide de lumière 2 l'aspect d'une aiguille de montre classique. Pour faciliter la fixation, par exemple par collage, de la pièce d'habillage 32, on peut prévoir de ménager dans la première portion de surface 20 une rainure 34 dans laquelle la pièce d'habillage 32 est logée. Par la suite, la pièce d'habillage 32 est en contact électrique par une tranche 36 avec l'axe d'entraînement 10. Cet axe d'entraînement 10, soit réalisé en un matériau électriquement conducteur, soit revêtu extérieurement d'une couche de matériau électriquement conducteur, est ensuite relié à la source d'alimentation 16. Selon une variante préférée mais non limitative, le bâti 18 est relié à une masse et le premier pôle 14A de la source de lumière 14 est relié au pôle positif de la source d'alimentation 16.

La figure 5 est une vue en coupe longitudinale d'un premier mode de réalisation d'un jeu d'aiguilles d'affichage lumineuses selon l'invention dans lequel les sources de lumière respectives sont montées en parallèle. Dans l'exemple représenté à la figure 5, le jeu d'aiguilles comprend une première et une seconde aiguille d'affichage lumineuse, respectivement 38 et 40. On comprendra que ces première et seconde aiguilles d'affichage lumineuses 38 et 40 présentent une structure analogue à celle de l'aiguille d'affichage lumineuse 1 décrite ci-dessus en liaison avec les figures 1 à 4.

La première aiguille d'affichage lumineuse 38 comprend un guide de lumière 42 formé d'un élément annulaire 44 prolongé par une partie 46 sensiblement rectiligne. L'élément annulaire 44 présente en son centre un trou 48 pour le passage d'un axe d'entraînement 50. Un logement 52 destiné à héberger une première source de lumière 54 telle qu'une diode électroluminescente est ménagé dans la partie annulaire 44 du guide de lumière 42, dans la zone où la partie rectiligne 46 se raccorde à cette partie annulaire 44. La première source de lumière 54 comprend des premier et second pôles 54A et 54B pour sa connexion électrique à une source d'alimentation 56 en énergie électrique logée à l'intérieur d'un bâti 58 par exemple d'une montre-bracelet équipée du jeu d'aiguilles d'affichage lumineuses selon l'invention. On notera que la source d'alimentation 56 en énergie électrique dont il est question ici est du même type que la source d'alimentation 16 décrite ci-dessus en liaison avec la figure 4. Le guide de lumière 42 est doté d'une première portion de surface 60 dirigée du côté d'un observateur, et d'une seconde portion de surface 62 opposée à la première portion de surface 60.

Une pièce support 64 électriquement conductrice en forme d'anneau porte la première source de lumière 54. Cette pièce support 64 est fixée dans une rainure circulaire 66 ménagée dans la base de l'élément annulaire 44.

La seconde aiguille d'affichage lumineuse 40 comprend un guide de lumière 68 formé d'un élément annulaire 70 prolongé par une partie 72 sensiblement rectiligne. L'élément annulaire 70 présente en son centre un trou 74 pour le passage d'un axe d'entraînement 76. Un logement 78 destiné à héberger une seconde source de lumière 80 telle qu'une diode électroluminescente est ménagé dans la partie annulaire 70 du guide de lumière 68, dans la zone où la partie rectiligne 72 se raccorde à cette partie annulaire 70. La seconde source de lumière 80 comprend des premier et second pôles 80A et 80B pour sa connexion électrique à la source d'alimentation 56 en énergie électrique logée à l'intérieur du bâti 58 par exemple d'une montre-bracelet équipée du jeu d'aiguilles d'affichage lumineuses selon l'invention. On notera que les première et seconde sources de lumière 54 et 80 sont du même type que la source de lumière 14 décrite ci-avant en liaison avec la figure 4.Le guide de lumière 68 est doté d'une première portion de surface 82 dirigée du côté d'un observateur, et d'une seconde portion de surface 84 opposée à la première portion de surface 82.

Une pièce support 86 électriquement conductrice en forme d'anneau porte la seconde source de lumière 80. Cette pièce support 86 est fixée dans une rainure circulaire 88 ménagée dans la base de l'élément annulaire 70.

L'axe d'entraînement 76 de la seconde aiguille d'affichage lumineuse 40 est disposé concentriquement à l'intérieur de l'axe d'entraînement 50 de la première aiguille d'affichage lumineuse 38, avec interposition d'une couche isolante 90 entre les deux axes d'entraînement 50 et 76.

Le premier pôle 54A de la première source de lumière 54 est relié à la source d'alimentation 56 via la pièce d'habillage 32 électriquement conductrice disposée sur la première portion de surface 60 du guide de lumière 42 et en contact électrique avec l'axe d'entraînement 50 de la première aiguille 38. Le second pôle 54B de la première source de lumière 54 est relié à la source d'alimentation 56 via le bâti 58 de l'objet portable. Le second pôle 54B de la première source de lumière 54 est relié au bâti 58 de l'objet portable et, par suite, à la source d'alimentation 56 en énergie électrique via la pièce support 64 électriquement conductrice. A titre d'exemple illustratif et non limitatif seulement, la connexion électrique entre la pièce support 64 et un élément du bâti 58 de l'objet portable tel qu'un cadran 92 au-dessus duquel se déplace l'aiguille d'affichage lumineuse 38 selon l'invention se fait par l'intermédiaire d'une pièce de frottement 94 électriquement conductrice.

Le premier pôle 80A de la seconde source de lumière 80 est relié au premier pôle 54A de la première source de lumière 54, et le second pôle 80B de la seconde source de lumière 80 est relié au bâti 58 de l'objet portable. Plus précisément, le premier pôle 80A de la seconde source de lumière 80 est relié au premier pôle 54A de la première source de lumière 54 par contact de frottement 96 entre la première et la seconde aiguille lumineuse 38, 40. Le second pôle 80B de la seconde source de lumière 80 est relié au bâti 58 de l'objet portable via la pièce d'habillage 32 électriquement conductrice ménagée sur la première portion de surface 82 du guide de lumière 68 et en contact électrique avec l'axe d'entraînement 76 de la seconde aiguille lumineuse 40. A titre d'exemple préféré mais non limitatif, le bâti 58 est relié à une masse et le premier pôle 54A de la première source de lumière 54 est relié à la borne positive de la source d'alimentation 56.

Dans ce qui suit, les éléments identiques à ceux décrits en liaison avec la figure 5 seront désignés par les mêmes références numériques.

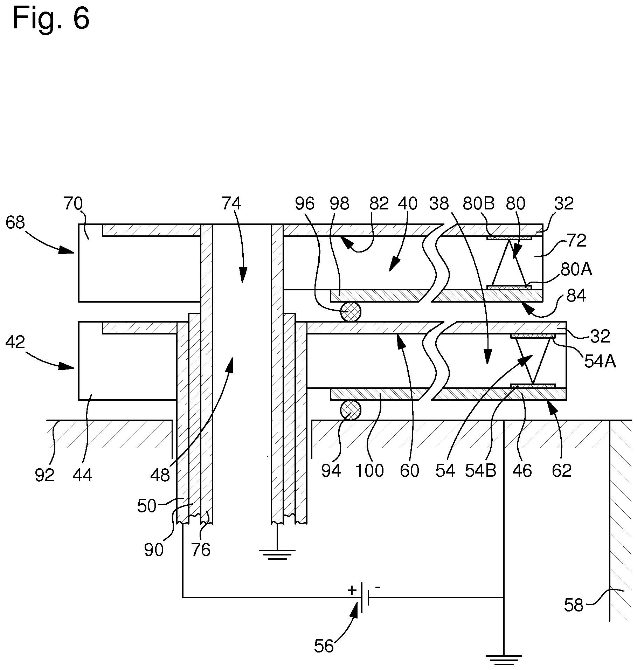

La figure 6 est une représentation schématique d'une variante de réalisation du jeu d'aiguilles d'affichage lumineuses selon l'invention dans lequel les sources de lumière sont montées en parallèle en bout d'aiguille. Dans ce mode de réalisation, les première et seconde sources de lumière 54 et 80, montées au voisinage de l'extrémité libre des première et seconde aiguilles d'affichage lumineuses 38 et 40, sont reliées en parallèle aux bornes de la source d'alimentation 56 en alimentation électrique. A titre d'exemple, le second pôle 80B de la seconde source de lumière 80 est relié au bâti 58 de l'objet portable via l'axe d'entraînement 76 de la seconde aiguille lumineuse 40. La connexion électrique entre le second pôle 80B de la seconde source de lumière 80 et l'axe d'entraînement 76 est assuré par la pièce d'habillage 32 électriquement conductrice ménagée sur la première portion de surface 82 de la seconde aiguille d'affichage lumineuse 40. Une piste 98 électriquement conductrice est ménagée sur la seconde portion de surface 84 pour la connexion électrique entre le premier pôle 80A de la seconde source de lumière 80 et le premier pôle 54A de la première source de lumière 54 via la pièce de frottement 96 électriquement conductrice et la pièce d'habillage 32 ménagée sur la première portion de surface 60 de la première aiguille d'affichage lumineuse 38. La pièce d'habillage 32 est en contact électrique avec l'axe d'entraînement 50 de la première aiguille 38. La piste conductrice 98 n'est par contre pas en contact avec l'axe d'entraînement 76 de la seconde aiguille d'affichage lumineuse 40. Une piste 100 électriquement conductrice est ménagée sur la seconde portion de surface 62 de la première aiguille d'affichage 38 pour assurer, via la pièce de frottement 94, la connexion électrique entre le second pôle 54B de la première source de lumière 54 et un élément du bâti 58 de l'objet portable tel que le cadran 92. La piste conductrice 100 n'est par contre pas en contact avec l'axe d'entraînement 50 de la première aiguille d'affichage lumineuse 38. A titre d'exemple préféré mais non limitatif, le bâti 58 est relié à une masse et l'axe d'entraînement 50 de la première aiguille lumineuse 40 est relié à la borne positive de la source d'alimentation 56. On notera d'autre part que le contact électrique procuré par la pièce de frottement 96 peut encore être amélioré par utilisation d'un agent de lubrification conducteur de l'électricité tel que du graphite.

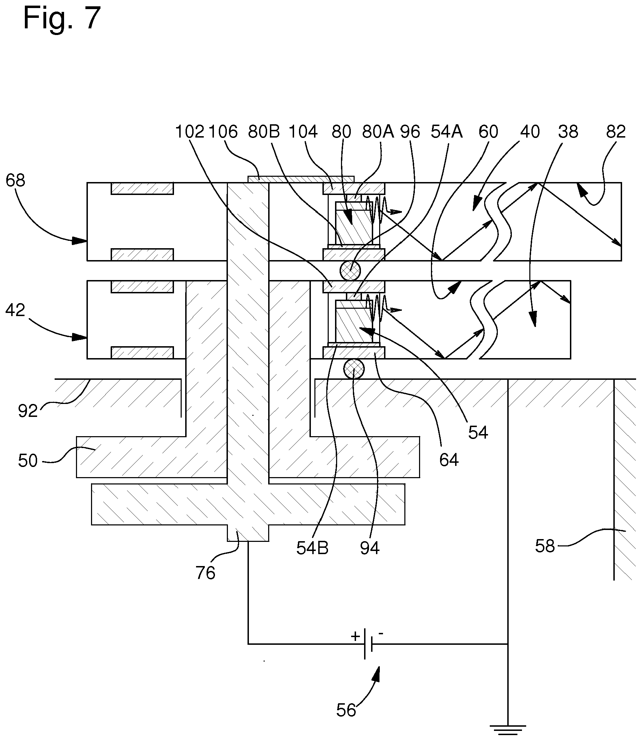

La figure 7 est une vue en coupe longitudinale d'un second mode de réalisation d'un jeu d'aiguilles d'affichage lumineuses selon l'invention dans lequel les sources de lumière respectives sont montées en série.

Le second pôle 54B de la première source de lumière 54 est relié à la source d'alimentation 56 via le bâti 58 de l'objet portable. A titre d'exemple, la connexion électrique entre la pièce support 64 et un élément du bâti 58 de l'objet portable tel que le cadran 92 au-dessus duquel se déplace l'aiguille d'affichage lumineuse 38 selon l'invention se fait par l'intermédiaire de la pièce de frottement 94 électriquement conductrice. Le premier pôle 54A de la première source de lumière 54 est relié au second pôle 80B de la seconde source de lumière 80 par contact de frottement 96 entre la première et la seconde aiguille lumineuse 38, 40. Plus précisément, le premier pôle 54A de la première source de lumière 54 est en contact avec une métallisation 102 en forme d'anneau ménagée dans la première portion de surface 60 du guide de lumière 42 dirigée du côté de l'observateur. Cette métallisation 102 est reliée électriquement avec le second pôle 80B de la seconde source de lumière 80 par l'intermédiaire de la pièce de frottement 96 électriquement conductrice. Le premier pôle 80A de la seconde source de lumière 80 est relié à la source d'alimentation 56 via l'axe d'entraînement 76 de la seconde aiguille d'affichage lumineuse 40. A cet effet, le premier pôle 80A de la seconde source de lumière 80 est en contact avec une métallisation 104 en forme d'anneau ménagée dans la première portion de surface 82 du guide de lumière 68 dirigée du côté de l'observateur. Cette métallisation 104 est à son tour reliée à l'axe d'entraînement 76 par exemple au moyen d'un fil de connexion électrique 106. A titre d'exemple préféré mais non limitatif, le bâti 58 est relié à une masse et l'axe d'entraînement 76 est relié à la borne positive de la source d'alimentation 56. On notera que, dans ce second mode de réalisation, l'axe d'entraînement 50 de la première aiguille d'affichage lumineuse 38 ne joue pas de rôle dans la connexion électrique des première et seconde sources de lumière 54 et 80. Par conséquent, l'axe d'entraînement 50 peut être réalisé indifféremment dans un matériau isolant ou conducteur de l'électricité. Par ailleurs, il n'est pas indispensable d'interposer une couche isolante entre les deux axes d'entraînement 50 et 76. La seule précaution à prendre est de s'assurer que la pièce support 64 et la métallisation 102 ne soient pas en contact avec l'axe d'entraînement 50 dans le cas où ce dernier est électriquement conducteur.

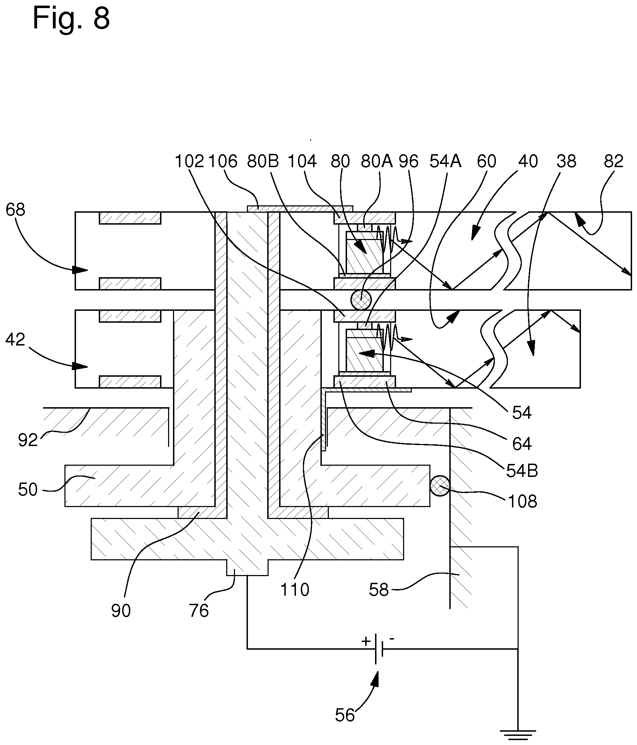

La figure 8 est une vue en coupe longitudinale d'une première variante de réalisation du jeu d'aiguilles d'affichage lumineuses dans laquelle les sources de lumière respectives sont montées en série.

Dans cette première variante de réalisation, l'axe d'entraînement 50 de la première aiguille d'affichage lumineuse 38 est relié à la source d'alimentation 56 via le bâti 58 de l'objet portable. A titre d'exemple, la connexion électrique entre l'axe d'entraînement 50 et un élément du bâti 58 de l'objet portable se fait par l'intermédiaire d'une pièce de frottement 108 électriquement conductrice. La connexion électrique entre le second pôle 54B de la première source de lumière 54 et la source d'alimentation 56 en énergie électrique se fait grâce à une métallisation 110 qui relie électriquement la pièce support 64 à l'axe d'entraînement 50. La connexion électrique entre le premier pôle 54A de la première source de lumière 54 et le second pôle 80B de la seconde source de lumière 80, et la connexion électrique entre le premier pôle 80A de la seconde source de lumière 80 et l'axe d'entraînement 76 de la seconde aiguille d'affichage lumineuse 40 restent inchangées par rapport à ce qui a été décrit à la figure 6. En particulier, une couche isolante 90 est interposée entre les deux axes d'entraînement 50 et 76.

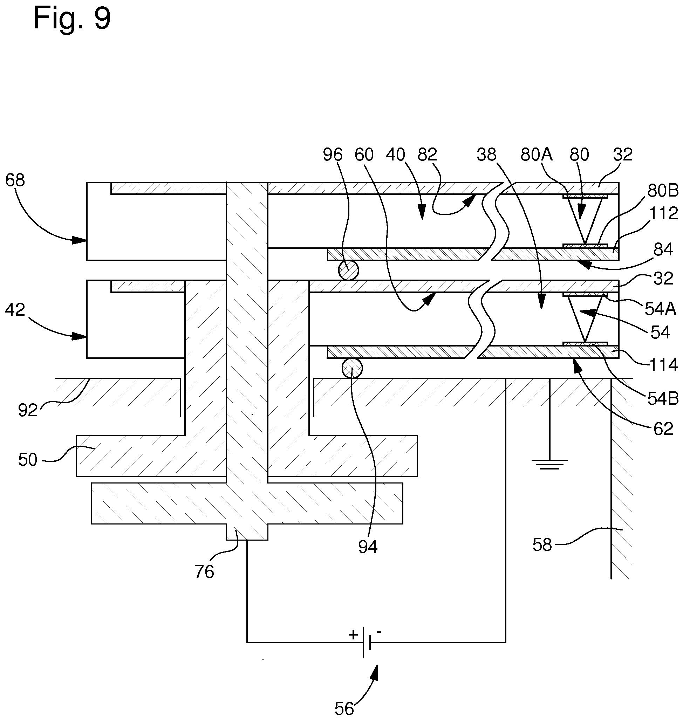

La figure 9 est une représentation schématique d'une seconde variante de réalisation du jeu d'aiguilles d'affichage lumineuses selon l'invention dans lequel les sources de lumière sont montées en série en bout d'aiguille. Dans ce second mode de réalisation, les première et seconde sources de lumière 54 et 80, montées au voisinage de l'extrémité libre des première et seconde aiguilles d'affichage lumineuses 38 et 40, sont montées en série aux bornes de la source d'alimentation 56 en alimentation électrique. A titre d'exemple, le premier pôle 80A de la seconde source de lumière 80 est relié au bâti 58 de l'objet portable via l'axe d'entraînement 76 de la seconde aiguille lumineuse 40. La connexion électrique entre le premier pôle 80A de la seconde source de lumière 80 et l'axe d'entraînement 76 est assuré par la pièce d'habillage 32 électriquement conductrice ménagée sur la première portion de surface 82 de la seconde aiguille d'affichage lumineuse 40. Une piste 112 électriquement conductrice est ménagée sur la seconde portion de surface 84 pour la connexion électrique entre le second pôle 80B de la seconde source de lumière 80 et le premier pôle 54A de la première source de lumière 54 via la pièce de frottement 96 et la pièce d'habillage 32 ménagée sur la première portion de surface 60 de la première aiguille d'affichage lumineuse 38. Une piste 114 électriquement conductrice est ménagée sur la seconde portion de surface 62 de la première aiguille d'affichage 38 pour assurer, via la pièce de frottement 94, la connexion électrique entre le second pôle 54B de la première source de lumière 54 et un élément du bâti 58 de l'objet portable tel que le cadran 92.

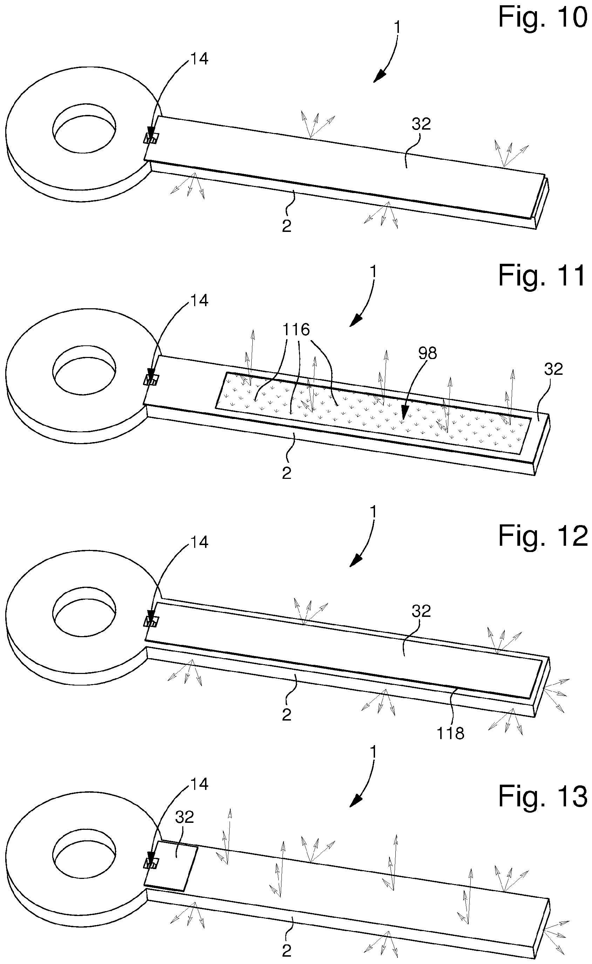

Dans un premier mode d'exécution de l'aiguille (figure 10), la largeur du guide de lumière 2 est égale ou inférieure à la largeur de la pièce d'habillage 32. De jour, l'aiguille d'affichage 1 a donc l'aspect d'une aiguille d'affichage ordinaire. De nuit, lorsque la source de lumière 14 est allumée, les bords diffusants du guide de lumière 2 génèrent des pertes lumineuses, de sorte que le pourtour de l'aiguille 1 est visible.

Dans un deuxième mode d'exécution de l'aiguille (figure 11), une ouverture 98 pratiquée dans la pièce d'habillage 32 laisse apercevoir le guide de lumière 2 qui est muni, dans sa partie visible, de microstructures 116 qui permettent d'extraire la lumière et donc d'illuminer l'aiguille. Selon une variante, le guide de lumière 2 est réalisé en un matériau intrinsèquement diffusant qui produit spontanément des pertes optiques dans tout le volume du matériau.

Dans un troisième mode d'exécution de l'aiguille (figure 12), la pièce d'habillage 32 est moins large que le guide de lumière 2 et le bord du guide de lumière 2 présente une forme prismatique 118 qui dévie la lumière vers l'utilisateur.

Dans un quatrième mode d'exécution de l'aiguille (figure 13), la pièce d'habillage 32 s'arrête au niveau de la partie annulaire 4 du guide de lumière 2 et des techniques d'extraction de la lumière similaires à celles décrites ci-dessus sont utilisées.

Il va de soi que la présente invention n'est pas limitée aux modes de réalisation qui viennent d'être décrits et que diverses modifications et variantes simples peuvent être envisagées par l'homme du métier sans sortir du cadre de l'invention tel que défini par les revendications annexées. On comprendra notamment que le diamètre du trou 8 percé dans l'élément annulaire 4 pour le passage de l'axe d'entraînement 10 a un diamètre légèrement supérieur à celui de l'axe d'entraînement 10. En effet, pour pouvoir chasser l'aiguille d'affichage lumineuse selon l'invention sur l'axe d'entraînement 10, il faut que l'axe d'entraînement 10 présente une certaine élasticité, faute de quoi l'axe d'entraînement 10 ne se déforme pas suffisamment durant le chassage et risque de casser. De même, on comprend que les dimensions de la source de lumière 14 doivent être telles qu'une fois placée dans son logement 12, la source de lumière 14 vienne en contact électrique avec la pièce d'habillage 32. Par ailleurs, il va de soi que plus les dimensions de la source de lumière 14 sont petites, plus l'aiguille d'affichage lumineuse selon l'invention pourra être mince. On notera d'autre part que, dans le cas où les sources de lumière sont montées en bout d'aiguille, on peut avantageusement utiliser des aiguilles, par exemple métalliques, de type conventionnel. Dans ce cas, en effet, il n'est pas nécessaire que la lumière se propage dans un guide de lumière pour permettre l'éclairage de l'aiguille. Les sources de lumière, montées au bout des aiguilles sur la surface supérieure de celles-ci, peuvent émettre de la lumière en direction de l'utilisateur. Elles peuvent aussi être montées à l'extrémité des aiguilles, de manière à émettre de la lumière dans le prolongement de celles-ci, ce qui permet d'éclairer par exemple un rehaut qui entoure le cadran au-dessus duquel se déplacent les aiguilles d'affichage lumineuses selon l'invention. Les sources de lumière peuvent aussi être montées sur la face arrière des aiguilles, de manière à éclairer le cadran. Il peut aussi être envisagé que les sources de lumière émettent de la lumière dans le sens opposé au sens habituel de rotation des aiguilles. De même, il peut être envisagé d'utiliser des sources de lumière de couleurs différentes pour chacune des aiguilles d'affichage lumineuses. On peut même envisager de monter par exemple deux sources de lumière de couleurs différentes sur chacune des aiguilles. Les sources de lumière d'une première couleur émettront de la lumière dans un premier mode de fonctionnement, par exemple en mode de réglage de l'affichage, et les sources de lumière d'une seconde couleur émettront de la lumière en mode de fonctionnement normal des aiguilles, par exemple en mode d'affichage de l'heure courante.

### Nomenclature

Aiguille d'affichage lumineuse 1
Guide de lumière 2
Elément annulaire 4
Partie rectiligne 6
Trou 8
Axe d'entraînement 10
Logement 12
Source de lumière 14
Premier et second pôles 14A, 14B
Source d'alimentation 16
Bâti 18
Première portion de surface 20
Seconde portion de surface 22
Pièce support 24
Rainure circulaire 26
Cadran 28
Pièce de frottement 30
Pièce d'habillage 32
Rainure 34
Tranche 36
Première aiguille d'affichage lumineuse 38
Seconde aiguille d'affichage lumineuse 40
Guide de lumière 42
Elément annulaire 44
Partie rectiligne 46
Trou 48
Axe d"entraînement 50
Logement 52
Première source de lumière 54
Premier et second pôles 54A, 54B
Source d'alimentation 56
Bâti 58
Première portion de surface 60
Seconde portion de surface 62
Pièce support 64
Rainure circulaire 66
Guide de lumière 68
Elément annulaire 70
Partie rectiligne 72
Trou 74
Axe d'entraînement 76
Logement 78
Seconde source de lumière 80
Premier et second pôles 80A, 80B
Première portion de surface 82
Seconde portion de surface 84
Pièce support 86
Rainure circulaire 88
Couche isolante 90
Cadran 92
Pièce de frottement 94
Contact de frottement 96
Piste électriquement conductrice 98
Piste électriquement conductrice 100
Métallisation 102
Métallisation 104
Fil de connexion électrique 106
Pièce de frottement 108
Métallisation 110
Piste électriquement conductrice 112
Piste électriquement conductrice 114
Microstructures 116
Forme prismatique 118

## Revendications

1. Jeu d'aiguilles d'affichage lumineuses pour un objet portable, l'objet portable comprenant un bâti (58) dans lequel est logée une source d'alimentation (56) en énergie électrique comprenant une première et une seconde bornes, le jeu d'aiguilles d'affichage lumineuses comprenant au moins une première et une seconde aiguille d'affichage lumineuse (38, 40) réalisées en un matériau non conducteur de l'électricité et dans lesquelles est ménagé un trou (48, 74) pour le passage d'un axe d'entraînement (50, 76), l'axe d'entraînement (76) de la seconde aiguille d'affichage lumineuse (40) étant disposé concentriquement à l'intérieur de l'axe d'entraînement (50) de la première aiguille d'affichage lumineuse (38), chacune des première et seconde aiguilles d'affichage lumineuses (38, 40) portant une première, respectivement une seconde source de lumière (54, 80) qui émet de la lumière, les première et seconde sources de lumière (54, 80) comprenant chacune un premier et un second pôle, les sources de lumière étant montées en parallèle et le premier pôle (80A) de la seconde source de lumière (80) étant relié au premier pôle (54A) de la première source de lumière (54) par contact entre la première et la seconde aiguille lumineuse (38, 40), une pièce support (86) électriquement conductrice qui porte la seconde source de lumière (80) étant fixée dans la base de l'élément annulaire (70) dont est munie la seconde aiguille d'affichage lumineuse (40) et étant reliée par une pièce de frottement (96) à une piste électriquement conductrice (32) en contact avec le premier pôle (54A) de la première source de lumière (54) et ménagée sur une première portion de surface (60) de la première aiguille d'affichage lumineuse (38) dirigée du côté d'un observateur, **caractérisé en ce que** le premier pôle (54A) de la première source de lumière (54) est relié à la source d'alimentation (56) via l'axe d'entraînement (50) de la première aiguille (38), et le second pôle (54B) de la première source de lumière (54) est relié à la source d'alimentation (56) via le bâti (58) de l'objet portable, le premier pôle (80A) de la seconde source de lumière (80) étant relié au premier pôle (54A) de la première source de lumière (54), et le second pôle (80B) de la seconde source de lumière (80) étant relié au bâti (58) de l'objet portable via l'axe d'entraînement (76) de la seconde aiguille lumineuse (40), une couche isolante (90) étant interposée entre les deux axes d'entraînement (50, 76).

2. Jeu d'aiguilles d'affichage lumineuses selon la revendication 1, **caractérisé en ce que** le premier pôle (80A) de la seconde source de lumière (80) est relié au premier pôle (54A) de la première source de lumière (54) par contact de frottement entre la première et la seconde aiguille lumineuse (38, 40).

3. Jeu d'aiguilles d'affichage lumineuses selon la revendication 2, **caractérisé en ce que** la première aiguille d'affichage lumineuse (38) comprend un guide de lumière (42) muni d'un élément annulaire (44) dans lequel est percé le trou (48) pour le passage de l'axe d'entraînement (50) de la première aiguille d'affichage lumineuse (38), la seconde aiguille d'affichage lumineuse (40) comprenant un guide de lumière (68) muni d'un élément annulaire (70) dans lequel est percé le trou (74) pour le passage de l'axe d'entraînement (76) de la seconde aiguille d'affichage lumineuse (40), le contact entre la première et la seconde aiguille lumineuse (38, 40) s'opérant par frottement entre les deux éléments annulaires (44, 70).

4. Jeu d'aiguilles d'affichage lumineuses selon l'une quelconque des revendications 1 à 3, **caractérisé en ce que** le second pôle (54B) de la première source de lumière (54) est relié au bâti (58) de l'objet portable et, par suite, à la source d'alimentation (56) en énergie électrique via une pièce support (64) électriquement conductrice fixée à la base d'un élément annulaire (44) par lequel la première aiguille d'affichage lumineuse (38) est fixée sur l'axe d'entraînement (50).

5. Jeu d'aiguilles d'affichage lumineuses selon la revendication 4, **caractérisé en ce que** la connexion électrique entre la pièce support (64) et un cadran (92) au-dessus duquel se déplace la première aiguille d'affichage lumineuse (38) se fait par l'intermédiaire d'une pièce de frottement (94).

6. Jeu d'aiguilles d'affichage lumineuses pour un objet portable, l'objet portable comprenant un bâti (58) dans lequel est logée une source d'alimentation (56) en énergie électrique comprenant une première et une seconde bornes, le jeu d'aiguilles d'affichage lumineuses comprenant au moins une première et une seconde aiguille d'affichage lumineuse (38, 40) réalisées en un matériau non conducteur de l'électricité et dans lesquelles est ménagé un trou (48, 74) pour le passage d'un axe d'entraînement (50, 76), l'axe d'entraînement (76) de la seconde aiguille d'affichage lumineuse (40) étant disposé concentriquement à l'intérieur de l'axe d'entraînement (50) de la première aiguille d'affichage lumineuse (38), chacune des première et seconde aiguilles d'affichage lumineuses (38, 40) portant une première, respectivement une seconde source de lumière (54, 80) qui émet de la lumière, les première et seconde sources de lumière (54, 80) comprenant chacune un premier et un second pôle, **caractérisé en ce que** les sources de lumière sont montées en série et **en ce que** le second pôle (80B) de la seconde source de lumière (80) est relié au premier pôle (54A) de la première source de lumière (54) par contact entre la première et la seconde aiguille lumineuse (38, 40), le second pôle (54B) de la première source de lumière (54) étant relié à la source d'alimentation (56) via le bâti (58) de l'objet portable, le premier pôle (54A) de la première source de lumière (54) étant relié au second pôle (80B) de la seconde source de lumière (80), et le premier pôle (80A) de la seconde source de lumière (80) étant relié à la source d'alimentation (56) via l'axe d'entraînement (76) de la seconde aiguille (40).

7. Jeu d'aiguilles d'affichage lumineuses selon l'une quelconque des revendications 1 à 6, **caractérisé en ce que** l'une au moins des sources de lumière (54, 80) est montée à une extrémité libre de l'aiguille d'affichage lumineuse correspondante.

## Patentansprüche

1. Set aus Leuchtzeigern zum Anzeigen fær einen tragbaren Gegenstand, wobei der tragbare Gegenstand ein Gehtuse (58) umfasst, in dem eine elektrische Energieversorgungsquelle (56) untergebracht ist, die einen ersten und einen zweiten Anschluss aufweist, wobei das Set aus Leuchtzeigern zum Anzeigen mindestens einen ersten und einen zweiten Leuchtzeiger zum Anzeigen (38, 40) umfasst, die aus einem elektrisch nicht leitendem Material hergestellt sind und in denen ein Loch (48, 74) fær den Durchgang einer Antriebsachse (50, 76) ausgespart ist, wobei die Antriebsachse (76) des zweiten Leuchtzeigers zum Anzeigen (40) konzentrisch innerhalb der Antriebsachse (50) des ersten Leuchtzeigers zum Anzeigen (38) angeordnet ist, wobei der erste und der zweite Leuchtzeiger zum Anzeigen (38, 40) eine erste bzw. eine zweite Lichtquelle (54, 80) tragen, die Licht aussenden, wobei die erste und die zweite Lichtquelle (54, 80) jeweils einen ersten und einen zweiten Pol aufweisen, wobei die Lichtquellen parallel montiert sind und der erste Pol (80A) der zweiten Lichtquelle (80) mit dem ersten Pol (54A) der ersten Lichtquelle (54) durch Kontakt zwischen dem ersten und dem zweiten Leuchtzeiger (38, 40) verbunden ist, wobei ein elektrisch leitendes Tragteil (86), das die zweite Lichtquelle (80) tr±gt, in der Basis des ringfØrmigen Elements (70) befestigt ist, mit dem der zweite Leuchtzeiger zum Anzeigen (40) versehen ist, und durch ein Reibungsteil (96) mit einer elektrisch leitenden Bahn (32) in Kontakt mit dem ersten Pol (54A) der ersten Lichtquelle (54) verbunden ist und auf einem ersten Oberfl±chenabschnitt (60) des ersten Leuchtzeigers zum Anzeigen (38) ausgebildet ist, der zur Seite eines Beobachters gerichtet ist, **dadurch gekennzeichnet, dass** der erste Pol (54A) der ersten Lichtquelle (54) mit der Versorgungsquelle (56) æber die Antriebsachse (50) des ersten Zeigers (38) verbunden ist und der zweite Pol (54B) der ersten Lichtquelle (54) mit der Versorgungsquelle (56) æber das Gehtuse (58) des tragbaren Gegenstands verbunden ist, wobei der erste Pol (80A) der zweiten Lichtquelle (80) mit dem ersten Pol (54A) der ersten Lichtquelle (54) verbunden ist und der zweite Pol (80B) der zweiten Lichtquelle (80) mit dem Gehtuse (58) des tragbaren Gegenstands æber die Antriebsachse (76) des zweiten Leuchtzeigers (40) verbunden ist, wobei zwischen die beiden Antriebsachsen (50, 76) eine Isolierschicht (90) eingefaßt ist.

2. Set aus Leuchtzeigern zum Anzeigen nach Anspruch 1, **dadurch gekennzeichnet, dass** der erste Pol (80A) der zweiten Lichtquelle (80) mit dem ersten Pol (54A) der ersten Lichtquelle (54) durch Reibkontakt zwischen dem ersten und dem zweiten Leuchtzeiger (38, 40) verbunden ist.

3. Set aus Leuchtzeigern zum Anzeigen nach Anspruch 2, **dadurch gekennzeichnet, dass** der erste Leuchtzeiger zum Anzeigen (38) einen ersten Lichtleiter (42) umfasst, der mit einem ringfØrmigen Element (44) versehen ist, in dem ein Loch (48) fær den Durchgang der Antriebsachse (50) des ersten Lichtanzeigezeigers (38) gebohrt ist, wobei der zweite Leuchtzeiger zum Anzeigen (40) einen Lichtleiter (68) umfasst, der mit einem ringfØrmigen Element (70) versehen ist, in dem das Loch (74) fær den Durchgang der Antriebsachse (76) des zweiten Leuchtzeigers zum Anzeigen (40) gebohrt ist, wobei der Kontakt zwischen dem ersten und dem zweiten Leuchtzeiger (38, 40) durch Reibung zwischen den beiden ringfØrmigen Elementen (44, 70) erfolgt.

4. S et aus Leuchtzeigern zum Anzeigen nach einem der Anspræche 1 bis 3, **dadurch gekennzeichnet, dass** der zweite Pol (54B) der ersten Lichtquelle (54) mit dem Gehtuse (58) des tragbaren Gegenstands verbunden ist und anschlieóend mit der elektrischen Energieversorgungsquelle (56) æber ein elektrisch leitendes Tragteil (64), das an der Basis eines ringfØrmigen Elements (44) befestigt ist, durch das der erste Leuchtzeiger zum Anzeigen (38) an der Antriebsachse (50) befestigt ist, verbunden ist.

5. Set aus Leuchtzeigern zum Anzeigen nach Anspruch 4, **dadurch gekennzeichnet, dass** die elektrische Verbindung zwischen dem Tragteil (64) und einem Zifferblatt (92), æber dem sich der erste Leuchtzeiger zum Anzeigen(38) verlagert, æber ein Reibungsteil (94) gebildet ist.

6. Set aus Leuchtzeigern zum Anzeigen fær einen tragbaren Gegenstand, wobei der tragbare Gegenstand ein Gehtuse (58) aufweist, in dem eine elektrische Energieversorgungsquelle (56) untergebracht ist, die einen ersten und einen zweiten Anschluss aufweist, wobei das Set aus Leuchtzeigern zum Anzeigen mindestens einen ersten und einen zweiten Leuchtzeiger zum Anzeigen (38, 40) umfasst, die aus einem elektrisch nicht leitendem Material hergestellt sind und in denen ein Loch (48, 74) fær den Durchgang einer Antriebsachse (50, 76) ausgespart ist, wobei die Antriebsachse (76) des zweiten Leuchtzeigers zum Anzeigen (40) konzentrisch innerhalb der Antriebsachse (50) des ersten Leuchtzeigers zum Anzeigen (38) angeordnet ist, wobei der erste und der zweite Leuchtzeiger zum Anzeigen (38, 40) eine erste bzw. eine zweite Lichtquelle (54, 80), die Licht aussenden, tragen, wobei die erste und die zweite Lichtquelle (54, 80) jeweils einen ersten und einen zweiten Pol aufweisen, **dadurch gekennzeichnet, dass** die Lichtquellen in Reihe geschaltet sind und dass der zweite Pol (80B) der zweiten Lichtquelle (80) mit dem ersten Pol (54A) der ersten Lichtquelle (54) durch Kontakt zwischen dem ersten und dem zweiten Leuchtzeiger (38, 40) verbunden ist, wobei der zweite Pol (54B) der ersten Lichtquelle (54) mit der Versorgungsquelle (56) æber das Gehtuse (58) des tragbaren Gegenstands verbunden ist, wobei der erste Pol (54A) der ersten Lichtquelle (54) mit dem zweiten Pol (80B) der zweiten Lichtquelle (80) verbunden ist und wobei der erste Pol (80A) der zweiten Lichtquelle (80) mit der Versorgungsquelle (56) æber die Antriebsachse (76) des zweiten Zeigers (40) verbunden ist.

7. Set aus Leuchtzeigern zum Anzeigen nach einem der Anspræche 1 bis 6, **dadurch gekennzeichnet, dass** mindestens eine der Lichtquellen (54, 80) an einem freien Ende des entsprechenden Leuchtzeigers zum Anzeigen montiert ist.

## Claims

1. Set of luminous display hands for a portable object, the portable object including a frame (58) which houses an electrical energy supply source (56) including a first and a second terminal, the set of luminous display hands including at least a first and a second luminous display hand (38, 40) made of an electrically non-conductive material and in which a hole (48, 74) is arranged for the passage of a drive arbor (50, 76), the drive arbor (76) of the second luminous display hand (40) being arranged concentrically inside the drive arbor (50) of the first luminous display hand (38), each of the first and second luminous display hands (38, 40) carrying a first, respectively a second light source (54, 80) which emits light, the first and second light sources (54, 80) each including a first and a second pole, the light sources being mounted in parallel and the first pole (80A) of the second light source (80) being connected to the first pole (54A) of the first light source (54) by contact between the first and second luminous hands (38, 40), an electrically conductive support piece (86) which carries the second light source (80) being fixed in the base of the annular element (70) of the second luminous display hand (40) and being connected by a friction part (96) to an electrically conductive external part (32) in contact with the first pole (54A) of the first light source (54) and arranged on a first surface portion (60) of the first luminous display hand (38) facing an observer, **characterized in that** the first pole (54A) of the first light source (54) is connected to the energy supply source (56) via the drive arbor (50) of the first hand (38), and **in that** the second pole (54B) of the first light source (54) is connected to the energy supply source (56) via the frame (58) of the portable object, the first pole (80A) of the second light source (80) being connected to the first pole (54A) of the first light source (54), and the second pole (80B) of the second light source (80) being connected to the frame (58) of the portable object via the drive arbor (76) of the second luminous hand (40), an insulating layer (90) being inserted between the two drive arbors (50, 76).

2. Set of luminous display hands according to claim 1, **characterized in that** the first pole (80A) of the second light source (80) is connected to the first pole (54A) of the first light source (54) by friction contact between the first and the second luminous hand (38, 40).

3. Set of luminous display hands according to claim 2, **characterized in that** the first luminous display hand (38) includes a light guide (42) provided with an annular element (44) in which is made the hole (48) for the passage of the drive arbor (50) of the first luminous display hand (38), the second luminous display hand (40) including a light guide (68) provided with an annular element (70) in which is made the hole (74) for the passage of the drive arbor (76) of the second luminous display hand (40), the contact between the first and the second luminous display hands (38, 40) occurring by friction between the annular elements (44, 70).

4. Set of luminous display hands according to any of claims 1 to 3, **characterized in that** the second pole (54B) of the first light source (54) is connected to the frame (58) of the portable object and, consequently, to the electrical energy supply source (56) via an electrically conductive support piece (64) fixed to the base of an annular element (44) via which the first luminous display hand (38) is fixed to the drive arbor (50).

5. Set of luminous display hands according to claim 4, **characterized in that** the electrical connection between the support piece (64) and a dial (92) above which moves the first luminous display hand (38) occurs via a friction part (94).

6. Set of luminous display hands for a portable object, the portable object including a frame (58) which houses an electrical energy supply source (56) including a first and a second terminal, the set of luminous display hands including at least a first and a second luminous display hand (38, 40) made of an electrically non-conductive material and in which a hole (48, 74) is arranged for the passage of a drive arbor (50, 76), the drive arbor (76) of the second luminous display hand (40) being arranged concentrically inside the drive arbor (50) of the first luminous display hand (38), each of the first and second luminous display hands (38, 40) carrying a first, respectively a second light source (54, 80) which emits light, the first and second light sources (54, 80) each including a first and a second pole, **characterized in that** the light sources are mounted in series and **in that** the second pole (80B) of the second light source (80) is connected to the first pole (54A) of the first light source (54) by contact between the first and second luminous hands (38, 40), the second pole (54B) of the first light source (54) being connected to the energy supply source (56) via the frame (58) of the portable object, the first pole (54A) of the first light source (54) being connected to the second pole (80B) of the second light source (80), and the first pole (80A) of the second light source (80) being connected to the energy supply source (56) via the drive arbor (76) of the second hand (40).

7. Set of luminous display hands according to any of claims 1 to 6, **characterized in that** at least one of light sources (54, 80) is mounted at the tip of the corresponding luminous display hand.
